# EUROPÄISCHE PATENTSCHRIFT

(11) **EP 2 169 579 B1**
(45) Veröffentlichungstag und Bekanntmachung des Hinweises auf die Patenterteilung: **29.06.2016**
(21) Anmeldenummer: 09011718.5
(22) Anmeldetag: 14.09.2009
(51) Int. Cl.: H04L 9/32, G07F 7/12, G07F 7/08, G06Q 20/40, G06Q 20/34, G06F 21/62, G06F 21/44, G06F 21/34, G07F 7/10, G07C 9/00

(54) **Verfahren und Vorrichtung zum Zugriff auf ein maschinenlesbares Dokument**
Method and device for accessing a machine readable document
Procédé et dispositif d'accès à un document lisible sur machine

(30) Priorität: 17.09.2008 DE 102008047639
(43) Veröffentlichungstag der Anmeldung: 31.03.2010
(73) Patentinhaber: Giesecke & Devrient GmbH, 81677 München (DE)
(72) Erfinder: Urian, Rainer, 86157 Augsburg (DE)

(56) Entgegenhaltungen:
- EP-A1- 1 635 302
- EP-A1- 1 873 729
- EP-A2- 0 875 868
- EP-A2- 1 686 541
- WO-A2-2007/141338
- US-A- 5 629 508
- US-A1- 2003 093 609
- "Technical Guideline TR-03110 Advanced Security Mechanisms for Machine Readable Travel Documents . Extended Access Control (EAC)" Bundesamt für Sicherheit in der Informationstechnik Nr. Version 1.11, 21. Februar 2008 (2008-02-21), Seiten 1-59, XP002565917 Bonn Gefunden im Internet: URL:https://www.bsi.bund.de/ContentBSI/Pub likationen/TechnischeRichtlinien/tr03110/i ndex_htm.html> [gefunden am 2010-01-21]
- "Technical Guideline TR-03110 Advanced Security Mechanisms for Machine Readable Travel Documents - Extended Access Control (EAC)" Bundesamt für Sicherheit in der Informationstechnik Nr. Version 2.0 - Public Beta 3, 2008, Seiten 1-89, XP002565918 Bonn Gefunden im Internet: URL:http://www.sec.informatik.tu-darmstadt .de/pages/lehre/SS08/itsec/material/EAC-2B eta3.pdf> [gefunden am 2010-01-29]
- VAUDENAY S ET AL: "About machine-readable travel documents" JOURNAL OF PHYSICS: CONFERENCE SERIES 48, INSTITUTE OF PHYSICS PUBLISHING, BRISTOL, GB, Bd. 77, Nr. 1, 1. Juli 2007 (2007-07-01), Seite 12006, XP020125228 ISSN: 1742-6596

## Beschreibung

Die Erfindung betrifft ein Verfahren sowie eine Vorrichtung zum Zugriff auf ein maschinenlesbares Dokument, insbesondere einen elektronischen Ausweis, mit einem darin enthaltenen Identifikationsdatum über ein Lesegerät. Die Erfindung betrifft ferner ein Computerprogrammprodukt sowie einen Token, insbesondere in Gestalt einer Chipkarte oder einer Smartcard oder eines USB-Speicherelements.

Gegenwärtig wird vielerorts die Einführung von elektronischen Pässen und/ oder persönlichen Identifikationskarten (allgemein: elektronischer Ausweis) diskutiert. Es ist vorgesehen, dass diese nur durch Lesegeräte ausgelesen oder beschrieben werden können, welche über ein besonderes Zertifikat verfügen, das als "CV-Zertifikat" bezeichnet wird. Dieses besondere Zertifikat soll nur an besonders vertrauenswürdige Stellen, insbesondere amtliche Behörden, ausgegeben werden. Dadurch soll verhindert werden, dass private Institutionen oder Privatpersonen elektronische Pässe oder Personalausweise auslesen können.

Ein denkbares Anwendungsgebiet für einen elektronischen Ausweis ist die Benutzung am heimischen PC einer Privatperson oder auch einer privaten Institution. Hierzu ist es notwendig, dass das private Lesegerät direkten Zugriff auf den elektronischen Ausweis hat. Eine denkbare Anwendung ist z.B. die Verwendung des elektronischen Ausweises zum Login an dem PC.

Als Authentisierungsverfahren soll bei der Verwendung des elektronischen Ausweises die sog. "General Authentication Procedure" (GAP) zum Einsatz kommen, die in der Technical Guideline TR-03110, "Advanced Security Mechanisms for Machine Readable Travel Documents - Extended Access Control (EAC) and Password Authenticated Connection Establishment (PACE)", Version 2.0 - Release Candidate, des BSI beschrieben ist. In Kapitel 3.4 sind die zur Durchführung des GAP-Protokolls notwendigen vier Schritte beschrieben:
1. PACE: Dabei gibt das Lesegerät den Lesegerättyp und erforderliche Zugriffsrechte an.
2. Terminal Authentication: In diesem Schritt authentisiert sich das Lesegerät gegenüber dem elektronischen Ausweis. Dazu wird zunächst über ein Zertifikat ein öffentlicher Prüfschlüssel in den elektronischen Ausweis eingetragen, welcher zu einem privaten Schlüssel des Lesegerätes korrespondiert. Danach wird über ein Challenge-Response Protokoll eine Signatur an den elektronischen Ausweis übermittelt, welche mit dem privaten Schlüssel des Lesegerätes erstellt wurde. Diese Signatur überprüft der elektronische Ausweis mit Hilfe des vorher eingetragenen öffentlichen Prüfschlüssels.
3. Passive Authentification: Das Lesegerät liest und überprüft ein Ausweis-Sicherheitsobjekt.
4. Chip Authentication: In diesem Schritt authentisiert sich der elektronische Ausweis gegenüber dem Lesegerät. Das Lesegerät prüft die Authentizität des elektronischen Ausweises über ein Zertifikat.

Welche Aktionen das Lesegerät hierbei in dem elektronischen Ausweis ausführen darf, wird über in dem CV-Zertifikat enthaltene Informationen bestimmt. Beispielsweise kann festgelegt sein, auf welche Dateninhalte des elektronischen Ausweises das Lesegerät zugreifen darf.

Gemäß diesem beschriebenen Vorgehen kann ein Lesegerät den über das CV-Zertifikat definierten Zugriff auf jedem beliebigen elektronischen Ausweis durchführen. Dies erklärt, warum die privaten Schlüssel zu den besonderen CV-Zertifikaten nur an besonders vertrauenswürdige Lesegeräte bzw. Institutionen herausgegeben werden. Aus demselben Grund kann der private Schlüssel privaten Institutionen oder Privatpersonen nicht uneingeschränkt überlassen werden. Mit privaten oder kommerziellen Lesegräten ist ein Zugriff auf einen elektronischen Personalausweis deshalb regelmäßig nicht möglich.

Es ist Ausgabe der vorliegenden Erfindung, ein Verfahren und eine Vorrichtung anzugeben, welche es insbesondere auch privaten Institutionen oder Privatpersonen ermöglicht, einen definierten Zugriff auf ein maschinenlesbares Dokument, insbesondere einen elektronischen Ausweis, vorzunehmen. Hierbei soll dennoch sichergestellt sein, dass nicht ein Zugriff auf beliebige maschinenlesbare Dokumente möglich ist. Ferner soll ein Computerprogrammprodukt angegeben werden.

Diese Aufgaben werden durch ein Verfahren mit den Merkmalen des Patentanspruches 1, ein Computerprogrammprodukt mit den Merkmalen des Patentanspruches 10, eine Vorrichtung mit den Merkmalen des Patentanspruches 11 und einen Token mit den Merkmalen des Patentanspruches 13 gelöst. Vorteilhafte Ausgestaltungsformen ergeben sich jeweils aus den abhängigen Patentansprüchen.

Die Erfindung schafft ein Verfahren zum Zugriff auf ein maschinenlesbares Dokument, insbesondere einen elektronischen Ausweis, mit einem darin enthaltenen Identifikationsdatum über ein Lesegerät. Ein mit dem Lesegerät in Kommunikationsverbindung stehender Token führt über das Lesegerät ein Authentisierungsverfahren gegenüber dem elektronischen Dokument durch. Der Token verfügt über den zu dem besonderen CV-Zertifikat korrespondierende privaten Schlüssel, kann aber dennoch nur auf ganz bestimmte Dokumente zugreifen. Der Token liest nach erfolgreicher Authentisierung gegenüber dem Dokument vermittels des Lesegeräts das Identifikationsdatum des Dokuments aus oder veranlasst das Auslesen durch das Lesegerät. Sodann überprüft der Token, ob das ausgelesene Identifikationsdatum mit einem in dem Token gespeicherten Referenzdatum übereinstimmt. Der Token lässt nur im Falle einer Übereinstimmung des Identifikationsdatums mit dem Referenzdatum ein Auslesen von Daten des Dokuments über das Lesegerät zu oder liest diese selbst aus. Im Falle einer Nichtübereinstimmung des Identifikationsdatums mit dem Referenzdatum verhindert der Token das Auslesen von Daten des Dokuments über das Lesegerät.

Die Erfindung schlägt weiter eine Vorrichtung zum Zugriff auf ein maschinenlesbares Dokument, insbesondere einen elektronischen Ausweis, mit einem darin enthaltenen Identifikationsdatum, vor. Die Vorrichtung umfasst ein Lesegerät, das in Kommunikationsverbindung mit dem maschinenlesbaren Dokument bringbar ist. Sie umfasst weiter einen mit dem Lesegerät in Kommunikationsverbindung stehenden Token, der dazu ausgebildet ist, über das Lesegerät ein Authentisierungsverfahren gegenüber dem elektronischen Dokument durchzuführen. Der Token ist weiter dazu ausgebildet, nach erfolgreicher Authentisierung gegenüber dem Dokument vermittels des Lesegeräts das Identifikationsdatum aus dem Dokument auszulesen oder das Auslesen durch das Lesegerät zu veranlassen. Der Token ist dazu in der Lage, zu überprüfen, ob das ausgelesene Identifikationsdatum mit einem in dem Token gespeicherten Referenzdatum übereinstimmt und im Falle einer Übereinstimmung des Identifikationsdatums mit dem Referenzdatum ein Auslesen von Daten des Dokuments über das Lesegerät zuzulassen oder diese Daten selbst auszulesen sowie im Falle einer Nichtübereinstimmung des Identifikationsdatums mit dem Referenzdatum das Auslesen von Daten des Dokuments über das Lesegerät zu verhindern.

Schließlich schlägt die Erfindung einen Token, insbesondere in Gestalt einer Chipkarte oder einer Smartcard oder eines USB-Speicherelements, zur Verbindung mit einem Lesegerät für den Zugriff auf ein maschinenlesbares Dokument, insbesondere einen elektronischen Ausweis, mit einem darin enthaltenen Identifikationsdatum über das Lesegerät, vor. Der Token umfasst ein erstes Mittel zur Durchführung eines Authentisierungsverfahrens gegenüber dem elektronischen Dokument über das Lesegerät. Der Token umfasst weiter ein zweites Mittel zum Auslesen des Identifikationsdatums des Dokuments oder zum Veranlassen des Auslesens des Identifikationsdatums durch das Lesegerät vermittels des Lesegeräts nach erfolgreicher Authentisierung gegenüber dem Dokument. Ein drittes Mittel dient zur Überprüfung, ob das ausgelesene Identifikationsdatum mit einem in dem Token gespeicherten Referenzdatum übereinstimmt. Ein viertes Mittel dient zur Zugriffskontrolle, durch das im Falle einer Übereinstimmung des Identifikationsdatums mit dem Referenzdatum ein Auslesen von Daten des Dokuments über das Lesegerät zugelassen oder vorgenommen wird und im Falle einer Nichtübereinstimmung des Identifikationsdatums mit dem Referenzdatum das Auslesen von Daten des Dokuments über das Lesegerät verhindert wird.

Unter einem Token wird in der nachfolgenden Beschreibung eine Hardwarekomponente verstanden, die Teil eines Systems zur Identifizierung und Authentifizierung des maschinenlesbaren Dokuments ist. Der Begriff Token soll hierbei alle einsetzbaren Technologien gleichermaßen umfassen und nicht von einer bestimmten Erscheinungsform der Hardware abhängen. Als Token werden somit alle Gegenstände verstanden, die Informationen zum Zweck der Identifikation und Authentifikation sowie gegebenenfalls weitere Informationen speichern und übertragen können.

Die Erfindung stellt eine Möglichkeit bereit sicherzustellen, dass der durch das besondere Zertifikat gewährte Zugriff auf ausgewählte maschinenlesbare Dokumente eingeschränkt wird. Der durch das besondere Zertifikat bereitgestellte Sicherheitsmechanismus wird in einen Tokens verlagert, mit dem das "private" Auslesen von maschinenlesbaren Dokumenten nur in begrenztem bzw. definierten Unfang möglich ist. Der Token befähigt das Lesegerät zur Ausführung eines Authentisierungsverfahrens gegenüber dem maschinenlesbaren Dokument. Nach erfolgreicher Authentisierung wird eine Überprüfung vorgenommen, ob ein in dem maschinenlesbaren Dokument enthaltenes Identifikationsdatum einem in dem Token gespeicherten Referenzdatum entspricht. Nur wenn diese Überprüfung positiv ist, wird ein Zugriff auf die Daten des maschinenlesbaren Dokuments erlaubt. Durch die Bindung des besonderen Zertifikats an den Token wird somit die Voraussetzung geschaffen, dass das besondere Zertifikat auch an weniger vertrauenswürdige Institutionen herausgegeben werden kann.

Der erfindungsgemäße Token umfasst einen Speicher, in dem eine Menge an Referenzdaten gespeichert ist, wobei ein jeweiliges Referenzdatum der Art nach einem aus dem Dokument auszulesenden Identifikationsdatum entspricht. Ist in dem Token lediglich ein einziges Identifikationsdatum enthalten, so ist auch lediglich der Zugriff auf ein einziges maschinenlesbares Dokument möglich, bei dem dessen Identifikationsdatum dem Referenzdatum entspricht. Soll über den Token der Zugriff auf eine Mehrzahl von maschinenlesbaren Dokumenten möglich sein, so werden in den Token mehrere Referenzdaten eingespeichert und überprüft, ob das Identifikationsdatum mit einem der Referenzdaten übereinstimmt.

Der Zugriff des Lesegeräts auf die Daten des Dokuments wird durch den Token geregelt und/ oder beschränkt. Hierdurch ist einAuslesen oder Beschreiben von Informationen aus einem Dokument nur gemäß der in dem Token hinterlegten Beschränkung möglich. Hierzu verfügt der Token über ein fünftes Mittel zur Beschränkung oder Regelung des Zugriffs des Lesegeräts auf die Daten des Dokuments.

Zweckmäßigerweise wird als Authentisierungsverfahren eine wechselseitige asymmetrische Authentisierung zwischen dem Token und dem Dokument verwendet. Besonders bevorzugt ist es hierbei, wenn als Authentisierungsverfahren eine General Authentication Procedure (GAP) gemäß der technischen Richtlinie TR-03110 verwendet wird. Im Unterschied zu den in dieser Richtlinie beschriebenen Kommunikationspartnern findet das Authentisierungsverfahren jedoch nicht zwischen dem Lesegerät und dem Dokument, sondern vielmehr zwischen dem Token und dem Dokument vermittels des Lesegeräts statt. Durch diese Vorgehensweise ist ein hoher Sicherheitsstandard gegenüber Manipulationen möglich.

Als in dem maschinenlesbaren Dokument enthaltenes Identifikationsdatum kann gemäß einer weiteren Ausgestaltung ein Zertifikat oder ein definierter Dateninhalt, insbesondere eine Dokumentennummer, des Dokuments ausgelesen und durch den Token verarbeitet werden. Handelt es sich bei dem maschinenlesbaren Dokument um einen elektronischen Ausweis, wie z.B. einen elektronischen Pass oder Personalausweis, so kann das Identifikationsdatum durch die entsprechende Pass- oder Personalausweisnummer repräsentiert sein.

Um einen hohen Sicherheitsstandard gegenüber Manipulationen bereitstellen zu können, ist weiter vorgesehen, dass der Token, insbesondere in Gestalt einer Chipkarte oder einer Smartcard oder eines USB-Speicherelements, von einer vertrauenswürdigen Stelle ausgegeben wird. Eine solche vertrauenswürdige Stelle kann beispielsweise der Hersteller des Tokens oder des maschinenlesbaren Dokuments sein. Die Personalisierung des Tokens kann bereits bei der Ausgabe erfolgen. Die Personalisierung kann auch nach der Ausgabe erfolgen. Personalisierung bedeutet in diesem Zusammenhang das Einspeichern von Referenzdaten in den Token, mit denen festgelegt wird, auf welche maschinenlesbaren Dokumente später zugegriffen werden kann. Die Personalisierung des Tokens kann auch nach der Herausgabe von vertrauenswürdigen Institutionen geändert werden, indem z.B. die Menge der Referenzdaten vergrössert wird. Gemäß der obigen Beschreibung erlaubt der Token lediglich den Zugriff auf solche maschinenlesbaren Dokumente, deren Identifikationsdatum einem der Referenzdaten in dem Token entspricht.

Das Authentisierungsverfahren kann beispielsweise dadurch gestartet werden, dass das Lesegerät eine Anfrage an den Token sendet, eine Aktion, z.B. ein Auslesen oder ein Schreiben von Daten, an dem Dokument ausführen zu können.

Von der Erfindung ist ferner ein Computerprogrammprodukt umfasst, das direkt in den internen Speicher eines oder mehrerer digitaler Rechner geladen werden kann und Softwarecodeabschnitte umfasst, mit denen die Schritte gemäß einem der vorherigen Ansprüche ausgeführt werden, wenn das Produkt auf dem einen oder den mehreren Rechnern läuft. Das Computerprogrammprodukt kann in Gestalt eines Datenträgers, wie z.B. einer CD-ROM, einer Diskette, einer DVD, einem USB-Speicher oder dergleichen, verkörpert sein. Das Computerprogrammprodukt kann auch durch ein über ein Computernetzwerk übertragbares Datensignal repräsentiert sein.

Die Erfindung wird nachfolgend näher anhand eines Ausführungsbeispiels erläutert. Es zeigen:
- Fig. 1: eine schematische Darstellung einer erfindungsgemäßen Vorrichtung zum Zugriff auf ein maschinenlesbares Dokument, und
- Fig. 2: den Ablauf eines erfindungsgemäßen Verfahrens zum Zugriff auf ein maschinenlesbares Dokument.

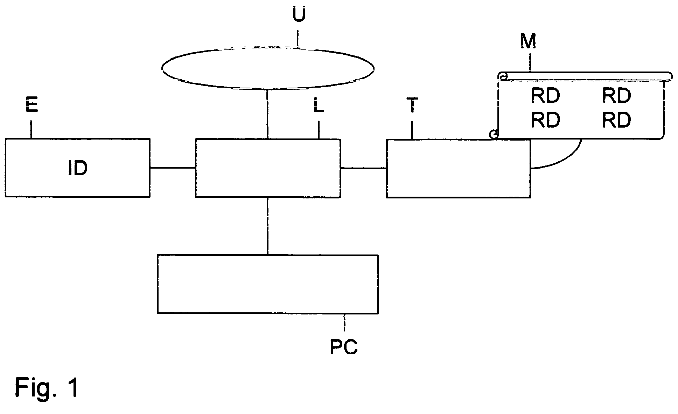

Fig.1 zeigt in schematischer Darstellung eine erfindungsgemäße Vorrichtung zum Zugriff auf ein maschinenlesbares Dokument E. Das maschinenlesbare Dokument E ist beispielsweise ein elektronischer Ausweis, wie z.B. ein elektronischer Pass oder elektronischer Personalausweis. In dem Dokument E ist ein auslesbares Identifikationsdatum ID enthalten. Das Identifikationsdatum ID kann durch ein Zertifikat oder einen definierten Dateninhalt gebildet sein. Insbesondere kann das Identifikationsdatum durch eine Dokumentennummer, wie z.B. eine Pass- oder Personalausweisnummer, gebildet sein. Die Vorrichtung umfasst ein Lesegerät L, das in Kommunikationsverbindung mit dem maschinenlesbaren Dokument E gebracht ist. Die Kommunikation zwischen dem Dokument E und dem Lesegerät L kann auf prinzipiell beliebige Art und Weise erfolgen. Insbesondere kann ein Datenaustausch kontaktbehaftet oder kontaktlos erfolgen. Das Lesegerät L ist im Ausführungsbeispiel mit einem Rechner PC gekoppelt, über welchen ein Nutzer U eine Anfrage auf eine bestimmte Aktion auf das Dokument E auslösen kann. Ferner können dem Nutzer U im Falle eines erlaubten Zugriffs auf die Daten des Dokuments E die entsprechenden Daten über den Rechner PC angezeigt werden. Mit dem Lesegerät L ist ein Token T verbunden.

Bei dem Token T handelt es sich um einen kryptographischen, manipulationssicheren Speicher, z.B. in Gestalt einer Smartcard, einer Chipkarte oder einem USB-Speicherelement. In dem Speicher des Tokens T ist eine Menge M an Referenzdaten RD enthalten. Die Menge M kann ein einzelnes Referenzdatum RD oder eine Mehrzahl an unterschiedlichen Referenzdaten RD enthalten. Ein jeweiliges Referenzdatum RD entspricht der Art nach (Datentyp, Länge und Aufbau des Datums) dem in dem Dokument enthaltenen Identifikationsdatum. Im Speicher des Tokens T liegt ferner der dem besonderen CV-Zertifikat zugeordnete private Schlüssel. Er ist derart abgelegt, dass es weder aus dem Token an ein externes Gerät übergeben noch verändert werden kann.

Zweck des Tokens T ist, den Zugriff des Lesegerätes L auf die Teilmenge M von Dokumenten E einzuschränken. Dazu wird der Token T in die Lage versetzt, an einem Dokument E erkennen zu können, ob dieses Dokument E zu der Teilmenge M gehört oder nicht. Dies geschieht dadurch, dass das Lesegerät L oder der Token T Zugriff nur auf diejenigen Daten des Dokuments E erhält, welche das Dokument E identifizieren. Dies kann durch das Identifikationsdatum erfolgen.

Die Menge M an Referenzdaten kann in den Speicher des Tokens bereits bei dessen Ausgabe eingetragen sein. Das Eintragen bzw. Einspeichern der Menge M an Referenzdaten RD wird auch als Personalisierung bezeichnet. Es besteht auch die Möglichkeit, den Token T nachträglich zu personalisieren, was den Vorteil einer größeren Flexibilität bietet. Dabei kann der Token T beispielsweise über eine Authentisierung des Besitzers des Dokuments E, z.B. durch eine PIN-Eingabe, in einen Personalisierungsmode geschaltet werden. Hierdurch wird der Token T in die Lage versetzt, diejenigen Daten aus dem Dokument E auszulesen, welche er für die Identifikation des Dokuments E benötigt. Das das Dokument E identifizierende Identifikationsdatum ID fügt der Token T der Menge M als Referenzdatum RD zu, indem er dieses in einem sicheren Bereich speichert.

Neben den Referenzdaten RD kann der Token T weitere Informationen enthalten, welche den Zugriff auf die Daten des Dokuments E regeln und/oder beschränken.

Bevor jedoch eine Überprüfung durch den Token T erfolgen kann, ob die Berechtigung zum Auslesen von Daten aus dem Dokument E möglich ist oder nicht, muss ein Authentisierungsverfahren durchgeführt werden. Das Authentisierungsverfahren wird hierbei durch den Token T über das Lesegerät L gegenüber dem elektronischen Dokument E durchgeführt. Initiiert werden kann das Authentisierungsverfahren durch eine von dem Lesegerät L an den Token T gesendete Anfrage, eine bestimmte Aktion auf dem Dokument E ausführen zu dürfen. Eine solche Aktion kann beispielsweise das Auslesen von Dateninhalten, das Schreiben von Dateninhalten, die Durchführung einer Altersverifikation usw. umfassen. Nach Erhalt einer derartigen Anfrage führt der Token T das Authentisierungsverfahren durch, welches bevorzugt ein wechselseitiges asymmetrisches Authentisierungsverfahren ist. Es ist besonders bevorzugt, wenn als Authentisierungsverfahren die in der technischen Richtlinie TR-03110 beschriebene General Authentication Procedure (GAP) durchgeführt wird. Im Rahmen dieses Verfahrens führt der Token T mit dem Dokument E das GAP-Protokoll aus, wobei die entsprechend zwischen dem Dokument E und dem Token T ausgetauschten Daten vermittels des Lesegeräts L ausgetauscht werden. Nach erfolgreicher Authentisierung liest der Token T aus dem Dokument E dessen Identifikationsdatum ID aus. Er überprüft anhand des Identifikationsdatums ID, ob ein entsprechendes Referenzdatum RD in der gespeicherten Menge M enthalten ist. Ist die Prüfung positiv, so führt der Token T die oben angefragte Aktion durch und übergibt das Ergebnis an das Lesegerät L.

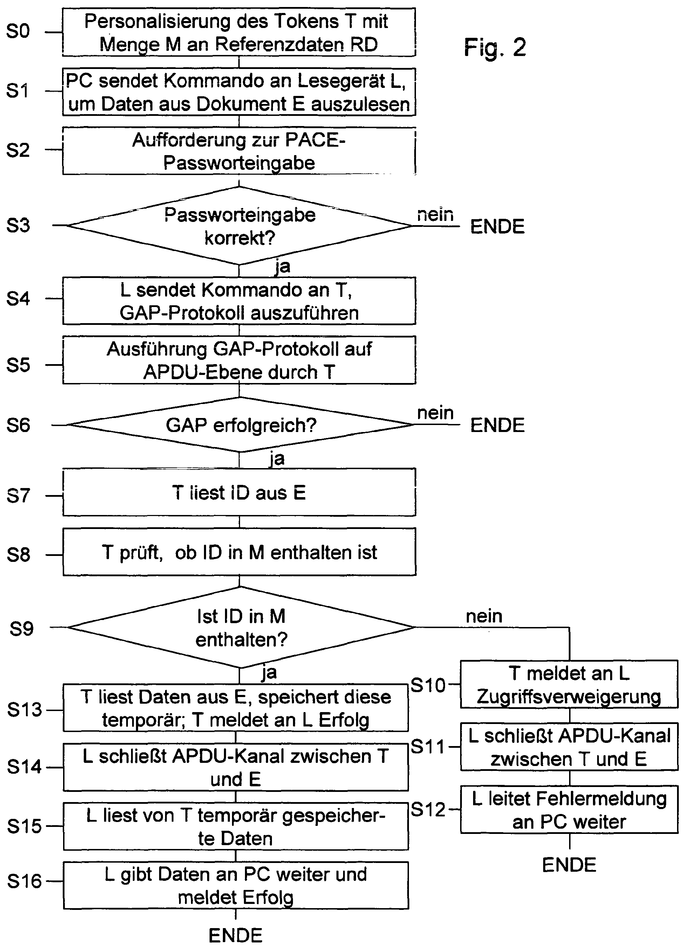

Fig. 2 zeigt ein Flussdiagramm des erfindungsgemäßen Verfahrens zum Zugriff auf das maschinenlesbare Dokument E mit dem darin enthaltenen Identifikationsdatum ID über das Lesegerät L. In einem Schritt S0 wird der Token T personalisiert. Die Personalisierung erfolgt vorzugsweise beim Herausgeber des Tokens T oder bei einer vertrauenswürdigen Institution. Im Rahmen der Personalisierung wird die Menge M mit einem oder mehreren Referenzdaten RD in den Token T eingespeichert. Eine Mehrzahl an Referenzdaten RD der Menge M ist beispielsweise dann zweckmäßig, wenn der Token in einem Rechnernetz verwendet wird, zu dem viele Teilnehmer Zugang haben. Weiter wird in den Token T der private Schlüssel des CV-Zertifkats eingeschrieben.

In einem Schritt S1 sendet der Rechner PC ein Kommando an das Lesegerät L, um Daten aus dem Dokument E auslesen zu können. Gemäß Schritt S2 fordert das Lesegerät L den Benutzer U über den Rechner PC auf, ein Passwort, insbesondere das sog. PACE-Passwort gemäß der technischen Richtlinie TR-03110, einzugeben. Das Passwort wird später indirekt dadurch überprüft, daß eine Secure Messaging Kommunikation oder ggf. möglich nicht ist.

Nachfolgend wird in Schritt S3 von dem Lesegerät L ein Kommando an den Token T gesendet, das GAP-Protokoll auszuführen. In Schritt S4 stellt das Lesegerät L einen direkten APDU (Application Protocol Data Unit)-Kanal zwischen dem Token T und dem Dokument E zur Verfügung. In Schritt S5 führt der Token T mit dem Dokument E das GAP-Protokoll auf APDU-Ebene durch. Gemäß Kapitel 3.4 der technischen Richtlinie TR-03110 führt der Token T mit Dokument E zunächst das PACE-Protokoll durch.

Anschließend führt der Token T mit Dokument E die Terminal-Authentisierung durch, in der sich der Token T gegenüber dem Dokument E authentisiert. Dabei übermittelt der Token T dem Dokument E über das CV-Zertifikat einen öffentlichen Prüfschlüssel. Nachfolgend übermittelt der Token I dem Dokument E im Wege eines Challenge-Response-Protokolls eine mit dem gespeicherten privaten Schlüssel erstellte Signatur. Das Dokument E prüft die Signatur mit dem über das CV-Zertifikat eingetragenen öffentlichen Schlüssel. Im Gutfall gestattet das Dokument E dem Token T grundsätzlich den Zugriff auf alle relevanten Datengruppen des Dokuments E. Anschließend führt der Token T mit dem Dokument E die passive Authentisierung durch, wonach sich die Chip Authentifikation anschließt.

In Schritt S6 liest der Token T aus dem Dokument E das Identifikationsdatum ID aus. In Schritt S7 überprüft der Token T, ob das Identifikationsdatum ID in der Menge M an Referenzdaten enthalten ist. Ist eine Übereinstimmung des Identifikationsdatums mit einem der Referenzdaten in der Menge M gegeben (Überprüfung gemäß Schritt S8), so liest der Token T die gewünschten Daten gemäß dem von dem Rechner PC an das Lesegerät L gesandten Kommando aus dem Dokument E aus und speichert sie temporär im Token T. Im gleichen Schritt S12 meldet der Token den Erfolg an das Lesegerät L. Daraufhin schließt das Lesegerät L in Schritt S13 den APDU-Kanal zwischen dem Token T und dem Dokument E. Danach liest das Lesegerät L in Schritt S14 von dem Token T die temporär gespeicherten Daten. Das Lesegerät L gibt diese Daten in Schritt S16 an den Rechner PC weiter und meldet einen Erfolg.

Ist eine Übereinstimmung des Identifikationsdatums mit einem der Referenzdaten in der Menge M nicht gegeben (Schritt S8), so gibt der Token T an das Lesegerät L eine Meldung bezüglich einer Zugriffsverweigerung aus.

Daraufhin schließt das Lesegerät L in Schritt S10 den APDU-Kanal zwischen dem Token T und dem Dokument E. Schließlich leitet das Lesegerät L in Schritt S11 die Fehlermeldung in den Rechner PC weiter.

Die Erfindung weist den Vorteil auf, dass durch die Einführung eines Tokens und dessen Kommunikationsverbindung mit dem Lesegerät L ein begrenzter Zugriff auf ein maschinenlesbares Dokument, insbesondere einen elektronischen Ausweis, ermöglicht werden kann, wobei durch die in dem Token kryptographisch hinterlegten Daten festgelegt werden kann, ob auf ein bestimmtes maschinenlesbares Dokument zugegriffen werden kann oder nicht. Ferner ermöglicht es der Token, einen erlaubten Zugriff zu regeln und/oder zu beschränken.

## Patentansprüche

1. Verfahren zum Zugriff auf ein maschinenlesbares Dokument (E), insbesondere einen elektronischen Ausweis, mit einem darin enthaltenen Identifikationsdatum (ID) über ein Lesegerät (L), bei dem
- ein mit dem Lesegerät (L) in Kommunikationsverbindung stehender Token (T) über das Lesegerät (L) ein Authentisierungsverfahren gegenüber dem elektronischen Dokument (E) durchführt, in dem der Token (T) dem Dokument (E) eine Signatur übermittelt, die dem Token (T) im Falle einer erfolgreichen Prüfung durch das Dokument (E) den Zugriff auf die Daten des Dokuments (E) ermöglicht,
- der Token (T) nach erfolgreicher Authentisierung gegenüber dem Dokument (E) vermittels des Lesegeräts das Identifikationsdatum (ID) des Dokuments (E) ausliest,
- der Token (T) überprüft, ob das ausgelesene Identifikationsdatum (ID) mit einem in dem Token (T) gespeicherten Referenzdatum (RD) übereinstimmt,
- der Token (T) im Falle einer Übereinstimmung des Identifikationsdatums (ID) mit dem Referenzdatum (RD) weitere Daten des Dokuments (E), deren Auslesen von dem Lesegerät (L) gewünscht wurde, ausliest und temporär speichert,
- das Lesegerät (L) die temporär gespeicherten Daten von dem Token (T) ausliest, und
- der Token (T) im Falle einer Nicht-Übereinstimmung des Identifikationsdatums (ID) mit dem Referenzdatum (RD) den Zugriff auf Daten des Dokuments (E) durch das Lesegerät (L) verweigert.

2. Verfahren nach Anspruch 1, bei dem in den Token (T) ein oder mehrere Referenzdaten (RD) eingespeichert werden und überprüft wird, ob das Identifikationsdatum (ID) mit einem der Referenzdaten (RD) übereinstimmt.

3. Verfahren nach Anspruch 1 oder 2, bei dem ein erlaubter Zugriff des Lesegeräts (L) auf die Daten des Dokuments (E) durch den Token (T) geregelt und/oder beschränkt wird.

4. Verfahren nach Anspruch 1, bei dem die Erstellung der Signatur mittels eines in dem Token (T) gespeicherten privaten Schlüssels erfolgt und die Prüfung der Signatur mittels eines öffentlichen Prüfschlüssels, der dem Dokument (E) mit einem besonderen Zertifikat in einem vorhergehenden Schritt übertragen wurde.

5. Verfahren nach einem der vorherigen Ansprüche, bei dem als Identifikationsdatum (ID) ein Zertifikat oder ein definierter Dateninhalt, insbesondere eine Dokumentennummer, des Dokuments (E) ausgelesen und durch den Token (T) verarbeitet wird.

6. Verfahren nach einem der vorherigen Ansprüche, bei dem als Token eine Chipkarte oder eine Smart Card verwendet wird, die von einer vertrauenswürdigen Stelle ausgegeben werden.

7. Verfahren nach Anspruch 6, bei dem die Personalisierung des Tokens (T) bei der Ausgabe oder nach der Ausgabe erfolgt.

8. Verfahren nach einem der vorherigen Ansprüche, bei dem das Authentisierungsverfahren dadurch gestartet wird, dass das Lesegerät (L) eine Anfrage an den Token (T) sendet, eine Aktion an dem Dokument (E) ausführen zu können.

9. Computerprogrammprodukt, das direkt in den internen Speicher eines oder mehrere digitaler Rechner geladen werden kann und Softwarecodeabschnitte umfasst, mit denen die Schritte gemäß einem der vorherigen Ansprüche ausgeführt werden, wenn das Produkt auf dem einen oder den mehreren Rechnern läuft.

10. Vorrichtung zum Zugriff auf ein maschinenlesbares Dokument (E), insbesondere einen elektronischen Ausweis, mit einem darin enthaltenen Identifikationsdatum (ID), umfassend:
- ein Lesegerät (L), das in Kommunikationsverbindung mit dem maschinenlesbaren Dokument (E) bringbar ist,
- einen mit dem Lesegerät (L) in Kommunikationsverbindung stehenden Token (T), der dazu ausgebildet ist
- über das Lesegerät (L) ein Authentisierungsverfahren gegenüber dem elektronischen Dokument (E) durchzuführen,
- nach erfolgreicher Authentisierung gegenüber dem Dokument (E) vermittels des Lesegeräts das Identifikationsdatum (ID) aus dem Dokument (E) auszulesen,
- zu überprüfen, ob das ausgelesene Identifikationsdatum (ID) mit einem in dem Token (T) gespeicherten Referenzdatum (RD) übereinstimmt, und
- im Falle einer Übereinstimmung des Identifikationsdatums (ID) mit dem Referenzdatum (RD) weitere Daten des Dokuments (E), deren Auslesen durch das Lesegerät (L) gewünscht war, auszulesen und temporär zu speichern, sowie
- im Falle einer Nicht-Übereinstimmung des Identifikationsdatums (ID) mit dem Referenzdatum (RD) den Zugriff auf Daten des Dokuments (E) durch das Lesegerät (L) zu verhindern, wobei
- das Lesegerät (L) weiter dazu ausgebildet ist, von dem Token (T) temporär gespeicherte Daten auszulesen.

11. Token, insbesondere Chipkarte oder Smart Card oder USB-Speicherelement, zur Verbindung mit einem Lesegerät (L) für den Zugriff auf ein maschinenlesbares Dokument (E), insbesondere einen elektronischen Ausweis, mit einem darin enthaltenen Identifikationsdatum (ID) über das Lesegerät (L), umfassend:
- ein erstes Mittel zur Durchführung eines Authentisierungsverfahrens gegenüber dem elektronischen Dokument (E) über das Lesegerät (L),
- ein zweites Mittel zum Auslesen des Identifikationsdatums (ID) des Dokuments (E) vermittels des Lesegeräts nach erfolgreicher Authentisierung gegenüber dem Dokument (E),
- ein drittes Mittel zur Überprüfung, ob das ausgelesene Identifikationsdatum (ID) mit einem in dem Token (T) gespeicherten Referenzdatum (RD) übereinstimmt,
- ein weiteres Mittel zum Auslesen und temporären Speichern von weiteren Daten des Dokuments (E), deren Auslesen von dem Lesegerät (L) gewünscht wurde,
- ein viertes Mittel zur Zugriffskontrolle, durch das
- im Falle einer Übereinstimmung des Identifikationsdatums (ID) mit dem Referenzdatum (RD) ein Auslesen von temporär gespeicherten Daten des Dokuments (E) durch das Lesegerät (L) zugelassen wird und
- im Falle einer Nicht-Übereinstimmung des Identifikationsdatums (ID) mit dem Referenzdatum (RD) der Zugriff auf Daten des Dokuments (E) durch das Lesegerät (L) verhindert wird.

12. Token nach Anspruch 11, bei dem in einem Speicher eine Menge an Referenzdaten (RD) gespeichert ist, wobei ein jeweiliges Referenzdatum der Art nach einem aus dem Dokument (D) auszulesenden Identifikationsdatum (ID) entspricht.

13. Token nach Anspruch 11, bei dem in einem Speicher ein privater Schlüssel abgelegt ist, der den Zugriff auf die Daten eines Dokuments (E) über ein Challenge-Response Protokoll ermöglicht.

14. Token nach einem der Ansprüch 11 bis 13, bei dem dieser ein fünftes Mittel zur Beschränkung oder Regelung eines erlaubten Zugriffs des Lesegeräts (L) auf die Daten des Dokuments (E) umfasst.

## Claims

1. A method for accessing a machine-readable document (E), in particular an electronic identity card, with an identification datum (ID) contained therein via a reading device (L), wherein
- a token (T) being in a communication connection to the reading device (L) carries out an authentication procedure with respect to the electronic document (E) via the reading device (L), wherein the token (T) transmits to the document (E) a signature enabling the token (T), in the case of a successful check by the document (E), to access the data of the document (E),
- the token (T), after successful authentication to the document (E), reads out the identification datum (ID) of the document (E) by means of the reading device,
- the token (T) checks whether the read-out identification datum (ID) matches a reference datum (RD) stored in the token (T),
- the token (T), in the case of a match of the identification datum (ID) with the reference datum (RD), reads out and temporarily stores further data of the document (E), the readout of which was requested by the reading device (L),
- the reading device (L) reads out the temporarily stored data from the token (T), and
- the token (T), in the case of a non-match of the identification datum (ID) with the reference datum (RD), denies access to data of the document (E) by the reading device (L).

2. The method according to claim 1, wherein one reference datum or several reference data (RD) are stored in the token (T) and it is checked whether the identification datum (ID) matches any one of the reference data (RD).

3. The method according to claim 1 or 2, wherein an authorized access of the reading device (L) to the data of the document (E) is regulated and/or limited by the token (T).

4. The method according to claim 1, wherein the creation of the signature is effected by means of a private key stored in the token (T) and the check of the signature is effected by means of a public verification key transferred to the document (E) with a special certificate in a previous step.

5. The method according to any of the preceding claims, wherein as the identification datum (ID) a certificate or a defined data content, in particular a document number, of the document (E) is read out and processed by the token (T).

6. The method according to any of the preceding claims, wherein as the token a chip card or a smart card is utilized, which are issued by a trustworthy authority.

7. The method according to claim 6, wherein the personalization of the token (T) is effected upon or after the issue.

8. The method according to any of the preceding claims, wherein the authentication procedure is started by the reading device (L) sending a request to the token (T) to be enabled to perform an action on the document (E).

9. A computer program product, which can be loaded directly into the internal memory of one or several digital computers and comprises software code sections with which the steps according to any of the preceding claims are performed when the product runs on the one or several computers.

10. An apparatus for accessing a machine-readable document (E), in particular an electronic identity card, with an identification datum (ID) contained therein, comprising:
- a reading device (L) which can be brought into communication connection with the machine-readable document (E),
- a token (T) being in a communication connection to the reading device (L), said token being configured to
- carry out an authentication procedure with respect to the electronic document (E) via the reading device (L),
- after successful authentication to the document (E) read out the identification datum (ID) from the document (E) by means of the reading device,
- check whether the read-out identification datum (ID) matches a reference datum (RD) stored in the token (T), and
- in the case of a match of the identification datum (ID) with the reference datum, to read out and temporarily store further data of the document (E), the readout of which was requested by the reading device (L), as well as
- in the case of a non-match of the identification datum (ID) with the reference datum (RD), to prevent the access to data of the document (E) by the reading device (L), wherein
- the reading device (L) is further configured to read out data temporarily stored by the token (T).

11. A token, in particular a chip card or smart card or USB memory element, for connection to a reading device (L) for access to a machine-readable document (E), in particular an electronic identity card, with an identification datum (ID) contained therein via the reading device (L), comprising:
- a first means for carrying out an authentication procedure with respect to the electronic document (E) via the reading device (L),
- a second means for reading out the identification datum (ID) of the document (E) by means of the reading device after successful authentication to the document (E),
- a third means for checking whether the read-out identification datum (ID) matches a reference datum (RD) stored in the token (T),
- a further means for reading out and temporarily storing further data of the document (E), the readout of which was requested by the reading device (L), a fourth means for access control, by which
- in the case of a match of the identification datum (ID) with the reference datum (RD), a readout of temporarily stored data of the document (E) by the reading device (L) is enabled and
- in the case of a non-match of the identification datum (ID) with the reference datum (RD), the access to data of the document (E) by the reading device (L) is prevented.

12. The token according to claim 11, wherein in a memory a set of reference data (RD) is stored, wherein one reference datum in each case corresponds in type to an identification datum (ID) to be read out from the document (D).

13. The token according to claim 11, wherein in a memory a private key is stored, which enables access to the data of a document (E) via a challenge-response protocol.

14. The token according to any of the claims 11 to 13, wherein said token comprises a fifth means for limiting or regulating an authorized access of the reading device (L) to the data of the document (E).

## Revendications

1. Procédé d'accès à un document (E) lisible à la machine, en particulier à une pièce d'identité électronique, renfermant une donnée d'identification (ID), par l'intermédiaire d'un appareil de lecture (L), dans lequel
- un jeton (T) étant en liaison de communication avec l'appareil de lecture (L) exécute, par l'intermédiaire de l'appareil de lecture (L), un procédé d'authentification vis-à-vis du document (E) électronique, ce qui a lieu en ce que le jeton (T) transmet au document (E) une signature qui, dans le cas d'une vérification positive par le document (E), permet au jeton (T) l'accès aux données du document (E),
- le jeton (T), après l'authentification positive vis-à-vis du document (E), lit par l'entremise de l'appareil de lecture la donnée d'identification (ID) du document (E),
- le jeton (T) vérifie si la donnée d'identification (ID) lue concorde avec une donnée de référence (RD) mémorisée dans jeton (T),
- le jeton (T), dans le cas d'une concordance de la donnée d'identification (ID) avec la donnée de référence (RD), lit et mémorise temporairement des données supplémentaires du document (E) dont la lecture était souhaitée par l'appareil de lecture (L),
- l'appareil de lecture (L) lit depuis le jeton (T) les données mémorisées temporairement, et
- le jeton (T), dans le cas d'une non-concordance de la donnée d'identification (ID) avec la donnée de référence (RD), refuse l'accès à des données du document (E) par l'appareil de lecture (L).

2. Procédé selon la revendication 1, dans lequel, dans le jeton (T), une ou plusieurs données de référence (RD) sont mises en mémoire, et dans lequel il est vérifié si la donnée d'identification (ID) concorde avec une des données de référence (RD).

3. Procédé selon la revendication 1 ou 2, dans lequel un accès autorisé de l'appareil de lecture (L) aux données du document (E) est réglé et/ou limité par le jeton (T).

4. Procédé selon la revendication 1, dans lequel, la génération de la signature a lieu au moyen d'une clé privée mémorisée dans le jeton (T), et la vérification de la signature a lieu au moyen d'une clé publique de vérification qui fut transmise au document (E) avec un certificat spécial à une étape préalable.

5. Procédé selon une des revendications précédentes, dans lequel, en tant que donnée d'identification (ID), c'est un certificat ou un contenu de données défini, en particulier un numéro de document, du document (E), qui est lu et traité par le jeton (T).

6. Procédé selon une des revendications précédentes, dans lequel, en tant que jeton, c'est une carte à puce ou une SmartCard qui est utilisée, lesquelles sont délivrées par un service de confiance.

7. Procédé selon la revendication 6, dans lequel la personnalisation du jeton (T) a lieu lors de la délivrance ou après la délivrance.

8. Procédé selon une des revendications précédentes, dans lequel le procédé d'authentification est démarré par le fait que l'appareil de lecture (L) envoie au jeton (T) une demande de permission d'exécution d'une action sur le document (E).

9. Produit programme d'ordinateur qui peut être chargé directement dans la mémoire interne d'un ou de plusieurs calculateurs numériques et comprend des sections de code de logiciel avec lesquelles les étapes suivant une des revendications précédentes sont exécutées quand le produit fonctionne sur l'un ou sur les plusieurs calculateurs.

10. Dispositif d'accès à un document (E) lisible à la machine, en particulier à une pièce d'identité électronique, renfermant une donnée d'identification (ID), comprenant:
- un appareil de lecture (L) susceptible d'être mis en relation de communication avec le document (E) lisible à la machine,
- un jeton (T) qui est en liaison de communication avec l'appareil de lecture (L) et est conçu pour
- par l'intermédiaire de l'appareil de lecture (L), exécuter un procédé d'authentification vis-à-vis du document (E) électronique,
- après une authentification positive vis-à-vis du document (E), lire au moyen de l'appareil de lecture la donnée d'identification (ID) depuis le document (E),
- vérifier si la donnée d'identification (ID) lue concorde avec une donnée de référence (RD) mémorisée dans jeton (T), et
- dans le cas d'une concordance de la donnée d'identification (ID) avec la donnée de référence (RD), lire et mémoriser temporairement des données supplémentaires du document (E) dont la lecture était souhaitée par l'appareil de lecture (L), ainsi que,
- dans le cas d'une non-concordance de la donnée d'identification (ID) avec la donnée de référence (RD), empêcher l'accès à des données du document (E) par l'appareil de lecture (L), cependant que
- l'appareil de lecture (L) est en outre conçu pour lire depuis le jeton (T) des données mémorisées temporairement.

11. Jeton, en particulier carte à puce ou SmartCard ou élément de mémorisation USB, destiné à la liaison avec un appareil de lecture (L) pour l'accès à un document (E) lisible à la machine, en particulier à une pièce d'identité électronique, renfermant une donnée d'identification (ID), par l'intermédiaire de l'appareil de lecture (L), comprenant:
- un premier moyen pour l'exécution d'un procédé d'authentification vis-à-vis du document (E) électronique par l'intermédiaire de l'appareil de lecture (L),
- un deuxième moyen pour la lecture de la donnée d'identification (ID) du document (E) par l'entremise de l'appareil de lecture après authentification positive vis-à-vis du document (E),
- un troisième moyen pour la vérification de la concordance de la donnée d'identification (ID) lue avec une donnée de référence (RD) mémorisée dans le jeton (T),
- un moyen supplémentaire pour la lecture et la mémorisation temporaire de données supplémentaires du document (E) dont la lecture fut souhaitée par l'appareil de lecture (L),
- un quatrième moyen pour la contrôle d'accès, par lequel
- dans le cas d'une concordance de la donnée d'identification (ID) avec la donnée de référence (RD), une lecture, par l'appareil de lecture (L), de données du document (E) temporairement mémorisées est admise et
- dans le cas d'une non-concordance de la donnée d'identification (ID) avec la donnée de référence (RD), l'accès à des données du document (E) par l'appareil de lecture (L) est empêché.

12. Jeton selon la revendication 11, dans lequel, dans une mémoire, une quantité de données de référence (RD) est mémorisée, une donnée de référence respective concordant, suivant son genre, avec une donnée d'identification (ID) à lire depuis le document (D).

13. Jeton selon la revendication 11, dans lequel, dans une mémoire, une clé privée est stockée, laquelle permet l'accès aux données d'un document (E) par l'intermédiaire d'un protocole challenge/response.

14. Jeton selon une des revendications de 11 à 13, dans lequel ce dernier comprend un cinquième moyen pour la limitation ou le réglage d'un accès autorisé de l'appareil de lecture (L) aux données du document (E).
